# FASCICULE DE BREVET EUROPEEN

(11) **EP 3 429 338 B1**
(45) Date de publication et mention de la délivrance du brevet: **21.10.2020**
(21) Numéro de dépôt: 17715517.3
(22) Date de dépôt: 14.03.2017
(51) Int. Cl.: A01K 1/01

(54) **SYSTÈME POUR LA COLLECTE DES DÉJECTIONS S'ÉCOULANT SUR LE SOL D'UNE ENCEINTE POUR L'ÉLEVAGE D'ANIMAUX**
SYSTEM FÜR DIE SAMMLUNG VON AUF DEN VIEHZUCHTSTALLBODEN FALLENDEN MIST
SYSTEM FOR THE COLLECTION OF EXCREMENTS DROPPING ON THE FLOOR OF A STABLE FOR ANIMAL BREEDING

(30) Priorité: 15.03.2016 FR 1652167
(43) Date de publication de la demande: 23.01.2019
(73) Titulaire: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle
(86) Numéro de dépôt international: PCT/FR2017/050578
(87) Numéro de publication internationale: WO 2017/158280

(56) Documents cités:
- EP-A1- 2 941 954
- DE-A1- 19 601 478
- DE-C1- 19 519 088

## Description

### DOMAINE TECHNIQUE AUQUEL SE RAPPORTE L'INVENTION

La présente invention concerne un système pour la collecte des déjections (notamment des déjections liquides et solides) s'écoulant sur le sol d'une enceinte pour l'élevage d'animaux, par exemple de bovins (bovins laitiers et/ou bovins à viande), en particulier pour l'aménagement des couloirs de circulation d'une telle enceinte d'élevage.

### ARRIERE-PLAN TECHNOLOGIQUE

Le confort des animaux constitue un paramètre déterminant dans le rendement d'un élevage, qui influence notamment la santé, la prise alimentaire, la fertilité et la longévité des animaux.

Ce confort des animaux est régi en particulier par des obligations légales qui sont définies dans les Traités d'Amsterdam (1999) et de Lisbonne (2009) relatifs au Protocole sur la protection et le bien-être des animaux, ainsi que par l'adoption de la seconde stratégie européenne pour le bien-être animal.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Ces déjections sont en plus susceptibles de rendre le sol glissant, avec les risques de chute et de blessure qui en découlent.

Plusieurs systèmes d'évacuation des déjections coexistent à ce jour : les systèmes d'évacuation mécanique, les systèmes de « châsse d'eau » et les systèmes de caillebotis.

Dans le cadre d'une solution par « évacuation mécanique », les déjections présentes sur le sol sont raclées une à plusieurs fois par jour par un dispositif de raclage dénommé rabot (manœuvré par un tracteur ou par des moyens automatiques), pour être amenées jusqu'à une fosse de collecte située hors du bâtiment d'élevage.

Toutefois, la séparation des urines et des fèces n'est pas optimale au sein d'un tel système d'évacuation, constituant ainsi une source importante d'ammoniac. De plus, l'installation d'un tel système d'évacuation implique des travaux de gros œuvre importants, qui sont difficiles à envisager dans une enceinte d'élevage existante.

Avec une « chasse d'eau », un liquide de chasse évacue énergiquement les déjections dans un caniveau puis vers une fosse extérieure.

Or, là encore, la séparation des urines et des fèces n'est pas optimale au sein d'un tel système d'évacuation, constituant encore une source importante d'ammoniac. De plus, la mise en œuvre d'un tel système conduit à une humidification importante des sols de l'enceinte d'élevage, susceptible de générer des problèmes d'adhérence et d'hygiène.

Plus généralement, un revêtement de sol excessivement humide est susceptible de provoquer des problèmes sanitaires au niveau des pieds des animaux, notamment de boiteries, constituant un trouble majeur de santé en élevage.

Parmi les infections à l'origine de boiteries, la dermatite digitée, encore appelée « maladie de Mortellaro », est la plus problématique.

Il existe par conséquent un besoin de solutions techniques permettant une réduction de l'humidité des surfaces d'appui sur le sol des enceintes d'élevage avec une évacuation efficace des liquides (en particulier des urines), avantageusement cela sans nécessiter des travaux de gros œuvre importants, de sorte à améliorer les conditions d'adhérence et les conditions sanitaires des animaux.

Il existe également un intérêt pour des solutions simples qui permettent éventuellement une certaine séparation des urines et des fèces, de manière à limiter la production d'ammoniac dans les enceintes d'élevage.

Les documents DE-196 01 478, DE-195 19 088 et EP-2 941 954 décrivent des systèmes pour la collecte des déjections s'écoulant sur le sol d'une enceinte pour l'élevage d'animaux.

Ces systèmes de collecte comprennent des conduits qui s'ouvrent au niveau de la surface supérieure, pour permettre l'écoulement des déjections.

Ces systèmes de collecte comprennent également des moyens de convoyage, sous la forme d'un câble sur la longueur duquel sont rapportés des disques ou pastilles, pour convoyer les déjections au sein des conduits en direction de moyens de collecte.

### OBJET DE L'INVENTION

Afin de remédier à l'inconvénient précité de l'état de la technique, la présente invention, divulguée dans la revendication 1, un système pour la collecte des déjections s'écoulant sur le sol d'une enceinte pour l'élevage d'animaux, par exemple de bovins.

Ce système de collecte comprend :
(i) un revêtement de sol comportant :
   - une surface supérieure adaptée à l'appui des animaux,
   - des conduits qui sont ménagés dans ledit revêtement de sol et qui s'ouvrent au niveau de ladite surface supérieure, pour permettre l'écoulement desdits déjections,
(ii) des moyens de collecte, pour la collecte des déjections circulant au sein desdits conduits, et
(iii) des moyens de convoyage, pour convoyer les déjections au sein desdits conduits en direction desdits moyens de collecte.

Les moyens de convoyage comprennent :
- au moins un organe d'entraînement allongé qui est rapporté le long de l'un au moins desdits conduits, et
- des moyens pour la manœuvre en translation dudit au moins un organe d'entraînement allongé au sein dudit au moins un conduit associé, de sorte que ledit au moins un organe d'entraînement allongé génère ladite circulation de liquide au sein dudit au moins un conduit associé.

Ledit au moins un organe d'entraînement allongé est réalisé dans au moins un matériau élastomère ; et ledit au moins un organe d'entraînement allongé comporte deux surfaces opposées.

Et ledit au moins organe d'entraînement allongé comporte des moyens de renfort longitudinal qui sont adaptés pour limiter les possibilités d'allongement longitudinal dudit organe d'entraînement allongé.

Un tel système permet une évacuation automatique et continue des liquides (notamment des urines) depuis la surface supérieure d'appui, jusqu'auxdits conduits.

La surface supérieure d'appui du revêtement de sol reste ainsi en permanence relativement peu humide, participant ainsi à améliorer les caractéristiques qualitatives du sol sur le plan de l'adhérence et de l'hygiène.

Cette structure permet également une séparation rapide et relativement efficace des urines par rapport aux fèces, pour limiter la production d'ammoniac au sein de l'enceinte d'élevage.

En effet, les urines vont tendre à être évacuées vers les conduits, pour leur entrainement par les moyens de convoyage ; les fèces vont quant à elles tendre à rester sur la surface supérieure d'appui, pour leur évacuation par raclage mécanique (par exemple avec un rabot) ou par raclage aqueux (par exemple hydrocurage).

Un tel système selon l'invention est en plus adapté à être implanté de manière simple au sein d'une enceinte d'élevage nouvelle ou existante (amélioration ou rénovation), cela sans nécessiter la mise en œuvre de travaux de gros œuvre importants.

La surface supérieure d'appui moins humide permet aussi à l'onglon des bovins d'être plus dur, ce qui participe à la bonne santé du pied de ces animaux et qui contribue à diminuer les risques de glissades des animaux.

Dans cet environnement moins humide et moins productif en ammoniac, le niveau bactérien et les pics de prolifération sont maintenus bas, ce qui rend la lutte contre les maladies du pied beaucoup plus simple.

Un tel système de collecte est en plus particulièrement intéressant dans le cas d'un sol recouvert de paille.

En effet, la surface d'appui tend à maintenir les matières solides (notamment la paille et les fèces) ; ainsi, ces matières solides sont susceptibles d'être raclées pour le nettoyage de ladite surface d'appui. Les moyens de convoyage sont ainsi protégés efficacement au sein des conduits, sans risque (ou tout au moins en réduisant les risques) d'interagir avec les matières solides de sorte à assurer un phénomène de circulation optimal pour les déjections dans les conduits respectifs.

De plus, la mise en œuvre de l'organe d'entraînement allongé précité dans ce système de collecte présente différents avantages :
- une réduction des frottements liés à son déplacement dans les conduits associés ;
- un convoyage optimal des déjections dans les conduits, jusqu'aux moyens de collecte ;
- des caractéristiques d'hygiène optimales ;
- une souplesse de l'organe d'entraînement allongé, permettant de s'adapter aux défauts du sol et aux corps étrangers éventuellement présents dans les conduits.

Le présent système présente encore deux avantages potentiels suivants :
- une protection des moyens de convoyage manœuvrés dans les conduits, et
- un masquage visuel des moyens de convoyage manœuvrés dans les conduits, de sorte à éviter une perturbation des animaux.

D'autres caractéristiques non limitatives et avantageuses du système de collecte conforme à l'invention, prises individuellement ou selon toutes les combinaisons techniquement possibles, sont les suivantes :
- lesdits moyens de convoyage comprennent : ledit au moins un organe d'entraînement allongé qui est rapporté le long de l'un au moins desdits conduits, lequel au moins un organe d'entrainement allongé comporte, réparties sur sa longueur, des surfaces de convoyage aptes à convoyer les déjections présentes au sein dudit au moins un conduit associé, et lesdits moyens pour la manœuvre en translation dudit au moins un organe d'entraînement allongé au sein dudit au moins un conduit associé, de sorte que lesdites surfaces de convoyage génèrent ladite circulation de liquide au sein dudit au moins un conduit associé ; ledit au moins un organe d'entraînement allongé comporte avantageusement lesdites deux surfaces opposées dont l'une au moins est munie de plots monoblocs qui sont répartis sur sa longueur pour former lesdites surfaces de convoyage ;
- seule l'une des deux surfaces opposées dudit au moins un organe d'entraînement allongé est munie des surfaces de convoyage ou les deux surfaces opposées dudit au moins un organe d'entraînement allongé sont chacune munies des surfaces de convoyage ; de préférence, les plots monoblocs des deux surfaces opposées dudit au moins un organe d'entraînement allongé sont agencés symétriquement, ou de manière décalée, de part et d'autre de la fibre neutre ;
- les moyens de renfort longitudinal dudit au moins un organe d'entraînement allongé comprennent une âme de renfort intégrée dans l'épaisseur dudit au moins un organe d'entraînement allongé, avantageusement au niveau de la fibre neutre ; de préférence, l'âme de renfort consiste en une trame textile s'étendant parallèlement, ou au moins approximativement parallèlement, aux surfaces opposées dudit au moins un organe d'entraînement allongé, avantageusement entre les surfaces de côté dudit au moins un organe d'entraînement allongé ; avantageusement encore, l'âme de renfort présente une forme générale ondulée, de part et d'autre de la fibre neutre ;
- les plots monoblocs comportent chacun deux faces frontales, aptes à former les surfaces de convoyage ;
- les deux surfaces opposées dudit au moins un organe d'entraînement allongé sont lisses, ou approximativement lisses (avantageusement avec des reliefs transversaux pour former lesdites surfaces de convoyage) ;
- les conduits ménagés dans ledit revêtement de sol sont chacun délimités par deux surfaces latérales définissant leur largeur, par une surface inférieure et éventuellement par une surface supérieure définissant sa hauteur ; ledit au moins un organe d'entraînement allongé est agencé dans lesdits conduits de sorte que ses deux surfaces opposées soient agencés en regard desdites surfaces latérales, le cas échéant de sorte que les plots monoblocs soient saillants horizontalement, ou de ladite surface inférieure et le cas échéant de ladite surface supérieure, le cas échéant de sorte que les plots monoblocs soient saillant verticalement ;
- les conduits ménagés dans ledit revêtement de sol sont chacun délimités par deux surfaces verticales définissant sa largeur, par une surface inférieure et éventuellement par une surface supérieure définissant sa hauteur ; la largeur dudit au moins un organe d'entraînement allongé est comprise entre 0,4 et 0,6 fois la largueur desdits conduits ; la hauteur dudit au moins un organe d'entraînement allongé est comprise entre 0,2 et 0,3 fois la hauteur desdits conduits ;
- les conduits du revêtement de sol ont chacun une largeur comprise entre 15 et 50 mm et une hauteur comprise entre 15 et 50 mm ; et les conduits du revêtement de sol sont espacés d'une largeur comprise entre 50 et 500 mm ;
- le revêtement de sol comprend (i) une chape réalisée en bitume ou en béton, dans laquelle sont ménagés lesdits conduits, ou (ii) un ensemble de longerons qui sont solidarisés avec une surface support, cela de manière juxtaposée et tout en préservant un espacement définissant lesdits conduits, ou (iii) un tapis comportant dans lequel sont ménagés lesdits conduits, comportant une face adaptée à l'appui des animaux et une face adaptée à reposer sur une surface support ;
- la surface supérieure adaptée à l'appui des animaux est réalisée dans un matériau apte à subir une déformation élastique ; dans ce cas, le revêtement de sol comprend avantageusement (i) une couche supérieure, réalisée dans un matériau apte à subir une déformation élastique et comportant la surface supérieure adaptée à l'appui des animaux, et (ii) des orifices traversants, ménagés au travers de ladite couche supérieure, s'étendant entre la surface supérieure de ladite couche supérieure et lesdits conduits, pour l'écoulement des déjections depuis ladite surface supérieure jusqu'auxdits conduits ;
- les conduits sont rectilignes et s'étendent parallèlement les uns par rapport aux autres ;
- le système comporte encore des moyens pour le raclage de la surface supérieure du revêtement de sol.

L'invention propose également une enceinte d'élevage équipée d'un système de collecte selon l'invention.

Cette enceinte d'élevage comporte avantageusement un couloir de circulation comportant un axe longitudinal et recouvert par un revêtement de sol ; et les conduits dudit revêtement de sol sont agencés parallèlement, ou au moins approximativement parallèlement, par rapport audit axe longitudinal.

L'invention concerne également un organe d'entraînement allongé pour un système de collecte selon l'invention. Cet au moins un organe d'entraînement allongé est réalisé dans au moins un matériau élastomère ; ledit au moins un organe d'entraînement allongé comporte deux surfaces opposées dont l'une au moins est munie de surfaces de convoyage (plots monoblocs par exemple) qui sont répartis sur sa longueur ; et ledit au moins organe d'entraînement allongé comporte des moyens de renfort longitudinal qui sont adaptés pour limiter ses possibilités d'allongement longitudinal.

L'invention concerne également le procédé de fabrication d'un organe d'entraînement allongé selon l'invention.

Ce procédé comprend :
a) une opération de fourniture :
   - d'au moins une pièce réalisée dans au moins un matériau élastomère, et
   - des moyens de renfort longitudinal, qui sont adaptés pour limiter les possibilités d'allongement longitudinal,
b) une opération d'assemblage et de formage, pour former une bande multicouches dont l'une au moins des deux surfaces opposées est munie de nervures monoblocs,
c) une opération de découpe de ladite bande multicouches, selon des traits de coupe orientés perpendiculairement auxdites nervures monoblocs, pour obtenir lesdits organes d'entraînement allongés munis des plots monoblocs.

### DESCRIPTION DETAILLEE D'UN EXEMPLE DE REALISATION

La présente invention sera encore illustrée, sans être aucunement limitée, par la description suivante de différents modes de réalisation particuliers, en relation avec les dessins annexés dans lesquels :
- la figure 1 représente, de manière générale et schématique, un système de collecte conforme à l'invention qui est destiné à équiper une enceinte d'élevage ;
- la figure 2 est une vue partielle et agrandie de la figure 1, montrant plus en détails la structure de son revêtement de sol et de ses moyens de convoyage ;
- la figure 3 est une vue schématique du revêtement de sol selon les figures 1 et 2, selon un plan de coupe transversal passant par l'un de ses conduits dans lequel s'étend un organe d'entraînement allongé constitutif des moyens de convoyage ;
- les figures 4 et 5 représentent partiellement, respectivement vue en perspective et vue de dessus, l'organe d'entraînement allongé équipant le système de collecte selon les figures 1 à 3, dont les deux surfaces opposées sont chacune munies de plots monoblocs décalés ;
- la figure 6 est une vue de dessus d'une variante de réalisation de l'organe d'entraînement allongé selon les figures 4 et 5, dont les deux surfaces opposées sont munies de plots monoblocs agencés symétriquement ;
- la figure 7 est une vue partielle et agrandie du revêtement de sol selon la figure 2, associé ici à des organes d'entraînement allongés dont seule l'une de leurs surfaces opposées est munie de plots monoblocs ;
- la figure 8 est une vue en perspective, et de manière isolée, de l'organe d'entraînement allongé équipant le système de collecte selon la figure 7 ;
- les figures 9 et 10 représentent partiellement, en perspective, l'organe d'entraînement allongé équipant le système de collecte selon les figures 1 à 3, dont les deux surfaces opposées sont lisses ou au moins approximativement lisses.

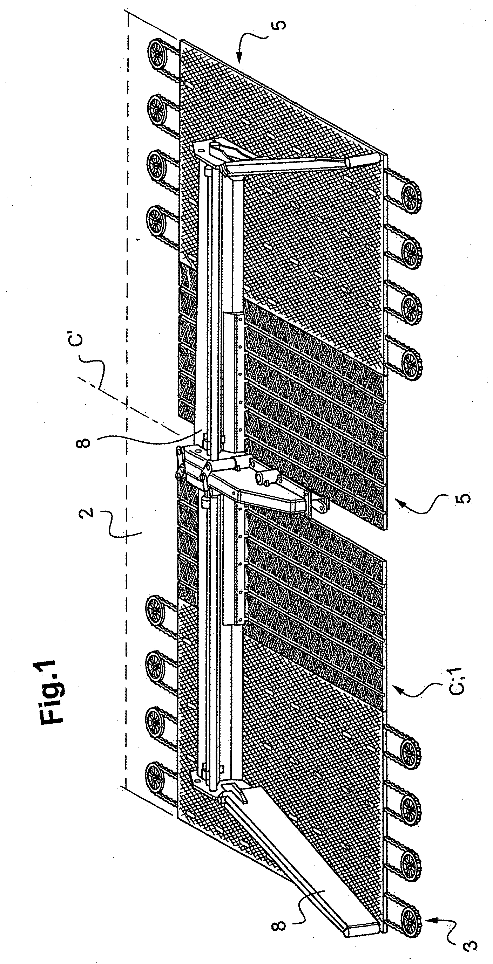

Les systèmes de collecte selon l'invention, représentés sur les figures 1 à 10, sont tout particulièrement adaptés à équiper une enceinte pour l'élevage d'animaux.

Tel que développé ci-après, de tels systèmes de collecte ont pour intérêt de collecter les déjections (en particulier les déjections liquides) s'écoulant sur le sol et de les évacuer, de sorte à offrir une surface d'appui relativement sèche (ou au moins ne présentant pas une humidité excessive) pour les pieds des animaux, et donc plus saine et plus sécurisante.

Par « animaux », on entend notamment les bovins (en particulier les vaches laitières ou les bovins à viande), les porcins, ou encore tout autre animal d'élevage (bovins, volailles, lapins, chevaux, etc.).

Une telle enceinte d'élevage (non représentée) consiste en un bâtiment limité par un bâti, adapté à l'élevage souhaité (une étable dans le cas de bovins).

Le système de collecte selon l'invention comprend les principaux éléments suivants :
- un revêtement de sol 1,
- des moyens de collecte 2, destinés à recevoir les déjections, et
- des moyens de convoyage 3, pour entraîner les déjections au sein du revêtement de sol 1, jusqu'aux moyens de collecte 2.

### Revêtement de sol

Le système de collecte selon l'invention comprend un revêtement de sol 1 qui recouvre au moins une partie du sol de l'enceinte d'élevage.

En particulier, tel que représenté schématiquement sur la figure 1, le revêtement de sol 1 est avantageusement implanté au niveau des couloirs de circulation C qui sont empruntés par les animaux cheminant entre les différents espaces fonctionnels de l'enceinte d'élevage (par exemple logette, salle de traite, etc.).

Le couloir de circulation C comporte avantageusement un axe longitudinal C'.

Ce revêtement de sol 1 est avantageusement apte à récupérer les liquides s'écoulant sur le sol et à séparer les matières solides (par exemple les fèces, la paille, etc.) en continu et par gravité.

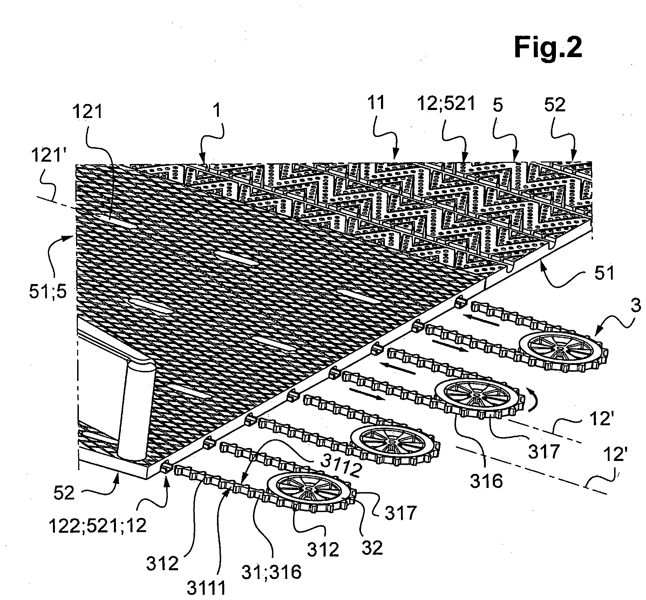

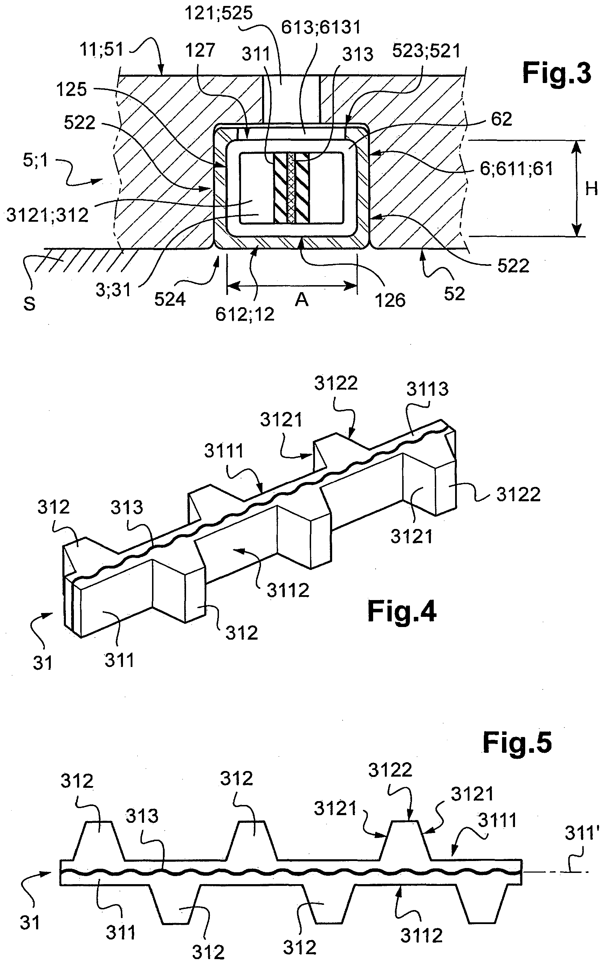

Pour cela, tel qu'illustré notamment sur les figures 2 et 3, le revêtement de sol 1 comporte :
- une surface supérieure 11 adaptée à l'appui des animaux, et
- des conduits 12 ménagés dans le revêtement de sol 1, sous-jacents de la surface supérieure 11 pour recevoir les déjections.

Ces conduits 12 sont aptes à collecter (par gravité) et à contenir les déjections (notamment les liquides) s'écoulant sur le revêtement de sol 1, de sorte que les liquides stagnent le moins possible sur la surface supérieure 11.

Par « liquides », on entend en particulier les déjections liquides produites par les animaux de l'élevage, en particulier leur urine.

Pour cela, les conduits 12 consistent ici en des structures fermées, de forme générale tubulaire, s'étendant sur toute la longueur du revêtement de sol 1 (notamment du couloir C).

Chaque conduit 12 comporte au moins une ouverture supérieure 121 qui débouche au niveau de la surface supérieure 11, pour permettre l'écoulement des déjections (et en particulier les liquides) depuis cette surface supérieure 11 jusqu'au conduit 12 associé.

Chaque conduit 12 peut ainsi comporter :
- une ouverture supérieure 121, longitudinale et continue, s'étendant sur toute ou partie de sa longueur (correspondant aux rainures centrales du revêtement de sol 1 de la figure 2), ou
- une pluralité d'ouverture supérieure 121, réparties sur sa longueur (correspondant aux conduits 12 latéraux du revêtement de sol 1 de la figure 2).

Dans le second cas, chaque ouverture supérieure 121 a avantageusement une forme allongée, par exemple oblongue.

Chaque ouverture supérieure 121 s'étend sur toute ou partie de la largeur du conduit 12.

Cette ouverture supérieure 121 comporte un axe longitudinal 121' s'étendant parallèlement à l'axe longitudinal 12' du conduit 12 (figure 2).

Par exemple, la largeur et la longueur de l'ouverture supérieure 121 sont comprises entre 5 mm et 120 mm, de préférence entre 5 mm et 30 mm.

La répartition et la densité de ces ouvertures supérieures 121 sont adaptées à façon. Cette répartition et cette densité peuvent en particulier tenir compte de la densité en animaux dans le bâtiment d'élevage.

Chaque conduit 12 est en plus terminé par deux extrémités ouvertes 122 (seule l'une d'elles est visible sur la figure 2), pour autoriser un écoulement et une évacuation des déjections cheminant dans ce conduit 12.

Les conduits 12 ont avantageusement des dimensions particulières pour permettre une collecte efficace des déjections.

A cet égard, comme illustré notamment sur la figure 3, les conduits 12 sont formés par une ceinture de surfaces longitudinales définissant deux dimensions : - une largeur A, et - une hauteur H.

En l'espèce, selon la figure 3, le conduit 12 a avantageusement :
- une largeur A d'au maximum 50 mm, de préférence comprise entre 15 et 50 mm, définie par deux surfaces verticales 125, et
- une hauteur H d'au minimum de 15 mm, avantageusement comprise entre 15 et 50 mm, avantageusement définie par une surface horizontale inférieure 126 et une surface horizontale supérieure 127.

Les conduits 12 sont régulièrement espacés les uns par rapport aux autres, sur le revêtement de sol 1. En d'autres termes, ces conduits 12 sont avantageusement régulièrement répartis sur le revêtement de sol 1.

De préférence, tel qu'illustré sur la figure 2, les conduits 12 sont rectilignes et s'étendent parallèlement les uns par rapport aux autres.

Chaque conduit 12 comporte ainsi un axe longitudinal 12', s'étendant parallèlement à l'axe longitudinal 12' des autres conduits 12.

Les conduits 12 sont avantageusement répartis sur la largeur du revêtement de sol 1 ; et ces conduits 12 s'étendent sur toute la longueur du revêtement de sol 1, avantageusement parallèlement à l'axe longitudinal C' du couloir C.

Ces conduits 12 ont de préférence un espacement compris entre 50 et 500 mm, et encore de préférence compris entre 10 et 300 mm.

Par ailleurs, la surface supérieure 11 adaptée à l'appui des animaux est réalisée en un matériau apte à subir une déformation élastique.

Un tel revêtement de sol 1 est alors avantageusement réalisé au moyen de tapis 5, avantageusement monoblocs, destinés à être apportés sur une surface support S de l'enceinte d'élevage et dans lesquels sont formés les conduits 12.

La surface support S de cette enceinte élevage consiste avantageusement en une chape (ou une dalle) en béton, éventuellement armé avec un treillis métallique, ou en bitume.

Un tel tapis 5 est avantageusement réalisé dans un matériau choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Le tapis 5 se présente ainsi avantageusement sous la forme générale d'une bande allongée (de forme générale parallélépipédique) comportant deux faces opposées 51, 52 dont l'une au moins est adaptée à former la surface supérieure 11 pour l'appui des animaux.

En l'espèce, le tapis 5 comporte :
- une première face 51, relativement plane, munie d'une pluralité de stries pour favoriser l'écoulement des liquides vers les ouvertures supérieures 121 des conduits 12 et pour favoriser l'adhérence des animaux,
- une seconde face 52 munie d'une pluralité de rainures 521, pour participer à former des conduits 12.

Tel que représenté sur la figure 3, chacune de ces rainures 521 est délimitée par deux surfaces latérales 522, verticales, et par une surface transversale 523, horizontale et ménagée à distance de la seconde face 52.

Chacune de ces rainures 521 comporte encore :
- une ouverture longitudinale 524, ménagée en regard de la surface transversale 523 et délimitée latéralement par les bordures libres des surfaces latérales 522, et
- au moins une ouverture traversante 525, s'étendant entre la surface transversale 523 et la première face 51 précitée, pour former une partie de l'ouverture supérieure 121 des conduits 12.

Des profilés longitudinaux 6 sont ici rapportés au sein des rainures 521 du tapis 5 pour former les conduits 12 proprement dit.

Tel que développé ci-après, un tel profilé longitudinal 6 a notamment l'intérêt de limiter les forces de frottement pour les moyens de convoyage 3 et d'assurer une canalisation optimale des déjections au sein des conduits 12.

Les profilés longitudinaux 6 sont avantageusement réalisés dans un matériau plastique, par exemple en polychlorure de vinyle (ou PVC).

Tel que représenté sur la figure 3, ces profilés longitudinaux 6 comportent des parois 61 délimitant au moins une chambre 62 destinée à recevoir les déjections et les moyens de convoyage 3.

Les parois 61 de ce profilé de guidage 6 forment les surfaces longitudinales d'un conduit 12, à savoir :
- deux parois latérales 611, verticales, agencées en regard des surfaces latérales 522 de la rainure 5 associée forment les surfaces verticales 125 du conduit 12, et
- des parois horizontales, l'une inférieure 612 et l'autre supérieure 613, forment respectivement les surfaces horizontales inférieure 126 et supérieures 127 du conduit 12.

Le profilé de guidage 6 épouse, avantageusement au jeu près, sa rainure 521 de réception.

En l'espèce, la paroi horizontale inférieure 612 s'étend dans le prolongement de la seconde face 52 du tapis 5 ; la paroi horizontale supérieure 613 vient en appui contre la surface transversale 523 de la rainure 521.

Les parois latérales 611 et inférieure 612 sont avantageusement pleines de sorte à former une sorte de rigole ou gouttière, étanche au liquide.

La paroi supérieure 613 comporte quant à elle au moins une ouverture supérieure 6131 agencée en regard de ladite au moins une ouverture supérieure 525 de la rainure 5 associée, pour former ensemble l'une des ouvertures supérieures 121 du conduit 12.

De manière alternative, non représentée, les rainures 521 peuvent former directement les conduits 12, sans nécessiter de les recouvrir avec des profilés longitudinaux 6.

Tel qu'illustrée sur les figures 1 et 2, seule une bande latérale du couloir de circulation C comporte un revêtement de sol 1 dont les conduits 12 sont associés aux moyens de convoyage 3.

Une partie centrale de ce couloir de circulation C est ici recouverte par des tapis 5 qui ont avantageusement une structure identique, ou au moins similaire, à celle décrite ci-dessus en relation avec les figures 1 à 3, sans moyens de convoyage 3.

Ces tapis 5 centraux sont alors déposés en sens inverse sur la surface support S par rapport aux tapis 5 latéraux, de sorte que :
- la première face 51 soit orientée vers le bas, en appui sur la surface support S, et
- la seconde face 52 soit orientée vers le haut, pour servir de surface d'appui et de sorte que ses rainures 521 soient ouvertes vers le haut pour servir de rigoles.

En d'autres termes, les tapis 5 centraux et latéraux sont déposés de manière inverse, du type recto-verso.

Selon un deuxième mode de réalisation non représenté, le revêtement de sol comprend un ensemble de longerons (ou chevrons) qui sont solidarisés directement avec la surface support S.

Ces longerons sont agencés de manière juxtaposée, tout en préservant des espaces entre eux qui sont destinés à définir les rainures 521 souhaitées.

La surface support S consiste là encore en du béton ou du bitume.

Chaque longeron comprend un ensemble de faces :
- une face inférieure, destinée à reposer sur la surface support S,
- une face supérieure, destinée à former une portion support de la surface supérieure 11 d'appui, et
- deux faces latérales, destinées chacune à former l'une des surfaces latérales 522 d'une rainure 5.

La face de fond des rainures 521 est quant à elle formée par une portion exposée de la surface support S, située entre deux des longerons juxtaposés.

La solidarisation de chaque longeron avec la surface support S est obtenue par exemple par le biais d'une fixation mécanique (pointage, rivetage, etc.) ou d'une fixation chimique (collage notamment).

Selon une troisième forme de réalisation selon l'invention, non représentée, la surface supérieure 11 d'appui est constituée par une chape réalisée en bitume ou en béton, dans laquelle sont ménagées directement les rainures 5.

De telles rainures 521 sont par exemple obtenues - au moyen d'un outil de type matrice, comportant le relief en négatif, appliqué sur le matériau en cours de solidification, ou - par rainurage mécanique d'un sol existant.

### Moyens de collecte

Les moyens de collecte 2 comprennent en particulier une fosse ou un canal de reprise (représentés très schématiquement sur la figure 1).

Ces moyens de collecte 2 sont installés au niveau de l'une au moins des deux extrémités ouvertes 122 des conduits 12 du revêtement de sol 1.

Une pente est avantageusement appliquée au revêtement de sol 1 (et en particulier à ses conduits 12), pour favoriser l'écoulement des fluides collectés en direction des moyens de collecte 2, à savoir la fosse (ou canal de reprise).

### Moyens de convoyage

De manière à générer une circulation optimale des déjections (et en particulier des liquides) en direction des moyens de collecte 2, le système de collecte selon l'invention comprend les moyens 3 pour convoyer les déjections le long de certains au moins des conduits 12 du revêtement de sol 1.

Ces moyens de convoyage 3 comprennent pour cela :
- au moins un organe d'entraînement allongé 31, rapporté le long d'au moins un conduit 12, et
- des moyens 32 pour la manœuvre en translation dudit au moins un organe d'entraînement allongé 31 au sein dudit au moins un conduit 12 associé, de sorte à générer le convoyage des déjections au sein dudit au moins un conduit 12.

L'organe d'entraînement allongé 31 selon l'invention est réalisé dans au moins un matériau élastomère.

Par « matériau élastomère », on entend en particulier le caoutchouc naturel, le caoutchouc « naturel synthétique » (ou poly-isoprène synthétique), le polybutadiène ou le styrène - butadiène.

Pour assurer un convoyage optimal, cet organe d'entraînement allongé 31 comporte en particulier un corps 311, d'une part, sur la longueur duquel est répartie une pluralité des surfaces de convoyage (formées par exemple par des plots monoblocs 312 ou par des reliefs transversaux 315) et, d'autre part, dans lequel sont rapportés des moyens de renfort longitudinal 313.

Les surfaces de convoyage sont adaptées à convoyer les déjections présentes au sein dudit au moins un conduit 12 associé.

Le corps 311 a ici une forme générale parallélépipédique qui est délimité par deux surfaces opposées 3111, 3112, frontales et parallèles entre elles, et par deux surfaces de côté 3113 (dites encore « surfaces de champ ») parallèles entre elles.

Les surfaces opposées 3111, 3112 comportent les surfaces de convoyage adaptées à convoyer les déjections présentes au sein dudit au moins un conduit 12 associé.

Ce corps 311 présente notamment une fibre neutre 311' (symbolisée schématiquement sur la figure 5), correspondant avantageusement ici à une ligne ou surface s'étendant à égale distance des deux surfaces opposées 3111, 3112 du corps 311.

### Moyens de renfort longitudinal

Les moyens de renfort longitudinal 313 sont adaptés pour limiter les possibilités d'allongement longitudinal de l'organe d'entraînement allongé 31, et en particulier de son corps 311.

Ces moyens de renfort longitudinal 313 se présentent ici sous la forme d'une âme de renfort intégrée / noyée dans l'épaisseur de l'organe d'entraînement allongé 31, et en l'occurrence de son corps 311.

Par exemple, cette âme de renfort 313 consiste en une trame textile s'étendant parallèlement, ou au moins approximativement parallèlement, aux surfaces opposées 3111, 3112 du corps 311.

Cette âme de renfort 313 est ici agencée au niveau de la fibre neutre 311' du corps 311. L'âme de renfort 313 s'étend alors avantageusement à égale distance des deux surfaces opposées 3111, 3112 du corps 311.

En l'espèce, cette âme de renfort 313 présente une forme générale ondulée de part et d'autre de la fibre neutre 311'.

En outre, cette âme de renfort 313 s'étend avantageusement sur toute la largeur du corps 311, entre ses deux surfaces de côté 3113.

### Répartition des plots monoblocs

Selon un mode de réalisation, les surfaces de convoyage sont formées par des plots monoblocs 312.

Les plots monoblocs 312 sont avantageusement réalisés d'une seule pièce avec le corps 311, et forment des surfaces adaptées à assurer le convoyage des déjections présentes dans le conduit 12 associé.

Ces plots monoblocs 312 sont pour cela répartis sur la longueur de l'une au moins des deux surfaces opposées 3111, 3112 du corps 311.

Selon les modes de réalisation illustrés sur les figures 3 à 6, les deux surfaces opposées 3111, 3112 de l'organe d'entraînement allongé 31 sont chacune munies d'une pluralité de plots monoblocs 312.

Plus précisément, selon un premier mode de réalisation des figures 4 et 5, les plots monoblocs 312 sont agencés de manière décalée (ou autrement dit en quinconce) de part et d'autre de la fibre neutre 311'.

Cette configuration décalée a l'intérêt d'autoriser un certain escamotage d'un plot monobloc 312 lorsqu'il rencontre un éventuel obstacle au cours de son cheminement le long du conduit 12 associé.

Pour optimiser cet escamotage, les plots monoblocs 312 sont avantageusement espacés d'une distance comprise entre 25 et 35 mm.

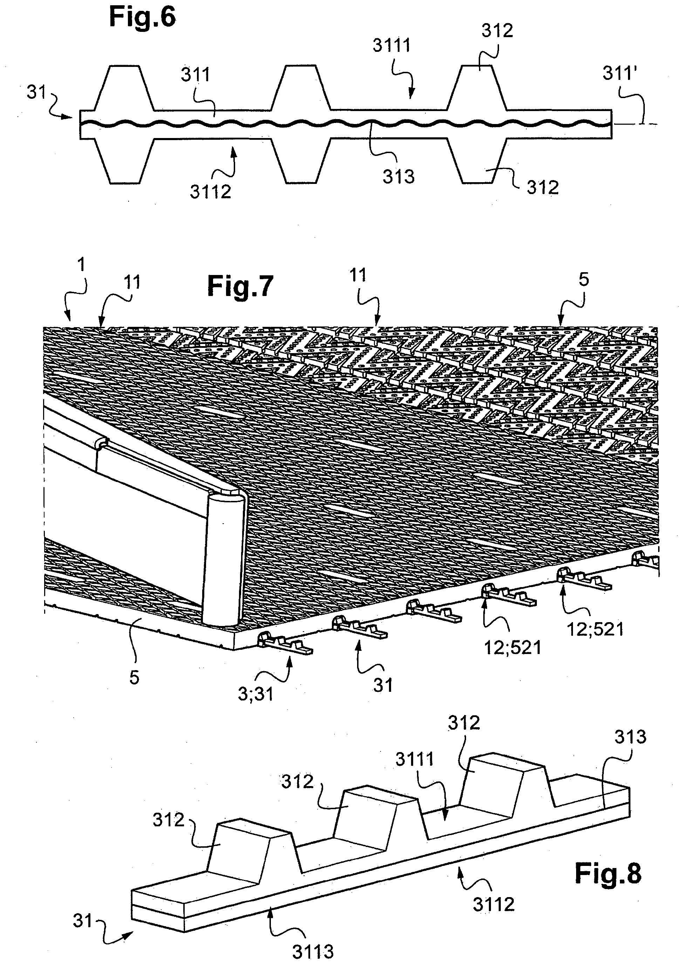

Selon un second mode de réalisation illustré sur la figure 6, les plots monoblocs 312 sont agencés symétriquement sur les deux surfaces opposées 3111, 3112, de part et d'autre de la fibre neutre 311' de l'organe d'entraînement allongé 31.

Tel qu'illustré sur les figures 2 et 3, l'organe d'entraînement allongé 31 (muni de plots monoblocs 312 sur ses deux surfaces opposées 3111, 3112) est avantageusement destiné à être agencé de sorte que ses plots monoblocs 312 soient saillants horizontalement.

Pour cela, l'organe d'entraînement allongé 31 est guidé dans son conduit 12 de sorte que :
- ses deux surfaces opposées 3111, 3112 soient agencées verticalement, en regard des surfaces verticales 125 de ce conduit 12, et
- ses deux surfaces de côté 3113 soient agencées horizontalement, en regard des surfaces horizontales 126, 127 de ce conduit 12.

Dans cette configuration, l'âme de renfort 313 est destinée à s'étendre verticalement, ou au moins approximativement verticalement.

Et l'une des surfaces de côté 3113 lisse, inférieure, est destinée à glisser sur la surface horizontale inférieure 126 du conduit 12 associé.

Les figures 7 et 8 illustrent une variante de réalisation pour l'organe d'entraînement allongé 31.

Dans cette forme de réalisation, seule une première surface opposée 3111 de l'organe d'entraînement allongé 311 est munie de plots monoblocs 312 formant les surfaces de convoyage.

La seconde surface opposée 3112 est lisse, dépourvue de tels plots monoblocs.

Tel qu'illustré sur la figure 7, un tel organe d'entraînement allongé 31 (muni de plots monoblocs 312 sur l'une seulement des deux surfaces opposées 3111) est avantageusement destiné à être agencé de sorte que ses plots monoblocs 312 soient saillants verticalement (avantageusement vers le haut et vers la surface horizontale supérieure 127 du conduit 12).

Pour cela, l'organe d'entraînement allongé 31 est guidé dans son conduit 12 de sorte que :
- ses deux surfaces opposées 3111, 3112 soient agencées en regard des surfaces horizontales 126, 127 de ce conduit 12, et
- ses deux surfaces de côté 3113 soient agencées en regard des surfaces verticales 125 de ce même conduit 12.

Dans cette configuration, l'âme de renfort 313 est destinée à s'étendre horizontalement, ou au moins approximativement horizontalement.

La seconde surface opposée 3112 lisse est destinée à glisser sur la surface horizontale inférieure 126 du conduit 12 associé.

### Profil des plots monoblocs

Les plots monoblocs 312 ont ici une section continue sur toute leur longueur.

Ces plots monoblocs 312 s'étendent avantageusement sur toute la largeur de la surface opposée 3111, 3112 associée (entre les deux surfaces de côté 3113).

Chacun de ces plots monoblocs 312 comporte deux faces frontales 3121 qui sont chacune raccordées, d'un côté, à l'une des surfaces opposées 3111, 3112 du corps 311 et, de l'autre côté, à une face latérale 3122.

Les faces frontales 3121 constituent ici les surfaces de convoyage de l'organe longitudinal allongé 31.

Les plots monoblocs 312 ont ici une section de forme générale trapézoïdale, ce qui permet une meilleure synchronisation du système et qui assure la transmission du mouvement sans glissement.

Chaque plot monobloc 312 comporte ainsi :
- deux faces frontales 3121 agencées de manière convergente, depuis l'une des surfaces opposées 3111, 3112 jusqu'à la face latérale 3122, et
- la face latérale 3122 s'étend parallèlement à la surface opposée 3111, 3112 associée.

La section de l'organe d'entraînement allongé 31 est adaptée à la section du conduit 12 associé.

Par exemple, la largeur dudit au moins un organe d'entraînement allongé 31 est comprise entre 0,4 et 0,6 fois la largueur A du conduit 12 associé.

Et la hauteur dudit au moins un organe d'entraînement allongé 31 est comprise entre 0,2 et 0,3 fois la hauteur H du conduits 12.

En l'espèce, pour l'organe d'entraînement allongé 31 muni de plots monoblocs 312 sur ses deux surfaces opposées 3111, 3112 :
- la largeur correspond à la distance séparant les faces latérales 3122 des plots monoblocs 312 de part et d'autre du corps 311, et
- la hauteur correspond à la distance séparant les surfaces de côté 3113.

Pour l'organe d'entraînement allongé 31 muni de plots monoblocs 312 sur l'une des deux surfaces opposées 3111 :
- la largeur correspond à la distance séparant les surfaces de côté 3113, et
- la hauteur correspond à la distance séparant les faces latérales 3122 des plots monoblocs 312 de la première surface opposée 3111 et la seconde surface opposée 3112.

Par exemple, l'organe d'entraînement allongé 31 comporte une largeur et une hauteur comprise entre 4 et 20 mm.

### Surfaces opposées lisses, ou approximativement lisses

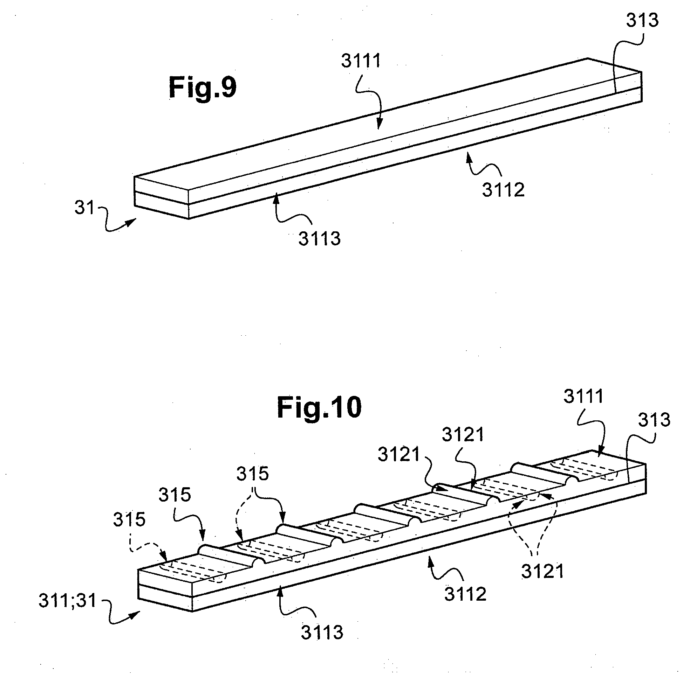

Les figures 9 et 10 illustrent une variante de réalisation pour l'organe d'entraînement allongé 31.

Selon le mode de réalisation de la figure 9, les deux surfaces opposées 3111, 3112 sont lisses.

Selon le mode de réalisation de la figure 10, l'une au moins des deux surfaces opposées 3111, 3112 (voire les deux surfaces opposées 3111, 3112) sont approximativement lisses avec des reliefs transversaux 315 (avantageusement du type nervure et/ou rainure).

Sur la figure 10, les nervures sont représentées en traits continus et les rainures sont représentées en traits discontinus.

Les reliefs transversaux 315 (monoblocs) sont avantageusement réalisés d'une seule pièce avec le corps 311, et forment des surfaces adaptées à assurer le convoyage des déjections présentes dans le conduit 12 associé.

Ces reliefs transversaux 315 sont pour cela répartis sur la longueur de l'une au moins des deux surfaces opposées 3111, 3112 du corps 311.

Les reliefs transversaux 315 ont ici une section continue sur toute leur longueur.

Ces reliefs transversaux 315 s'étendent avantageusement sur toute la largeur de la surface opposée 3111, 3112 associée (entre les deux surfaces de côté 3113).

Chacun de ces reliefs transversaux 315 comporte deux faces frontales 3121 qui sont chacune raccordées à l'une des surfaces opposées 3111, 3112 du corps 311.

Les faces frontales 3121 constituent ici les surfaces de convoyage de l'organe longitudinal allongé 31.

Selon les figures 9 et 10, l'organe d'entraînement allongé 31 est avantageusement agencé dans les conduits 12 de sorte que ses deux surfaces opposées 3111, 3112 soient agencées en regard de ladite surface inférieure 126 et le cas échéant de la surface supérieure 127.

### Moyens de manœuvre

Les organes d'entraînement allongés 31 comportent avantageusement des brins actifs 316 qui s'étendent chacun au sein de l'un des conduits 12.

Ces brins actifs 316 sont raccordés par des brins de jonction 317, s'étendant entre deux des brins actifs 316 successifs (figure 2).

Les moyens de manœuvre 32 comprennent avantageusement un ensemble de poulies 32 coopérant chacune avec l'un des brins de jonction 317 pour leur guidage entre deux conduits 12.

Les poulies 32 sont par exemple agencées ici de sorte que les organes d'entrainement allongés 31 forment un ensemble d'aller-retour au sein des conduits 12 successifs, pour présenter une forme générale de S (figure 2).

L'une au moins de ces poulies 32 est motorisée pour assurer le cheminement des organes d'entrainement allongés 31.

La vitesse de cheminement est par exemple comprise entre 1 et 10 m/min, notamment suivant la concentration en animaux au m² et le type de déjection.

Deux brins actifs 316 successifs cheminent ainsi dans des sens inverses l'un par rapport à l'autre.

### Moyens de raclage

De préférence, cette installation de collecte comporte encore des moyens 8 pour le raclage de la surface supérieure 11 (représentés schématiquement sur la figure 1).

Ces moyens de raclage 8 consistent par exemple en un rabot dont la bordure inférieure repose sur la surface supérieure 11.

Ce rabot est destiné à être manœuvré en translation sur la longueur du revêtement de sol 1 pour repousser les matières solides (fèces, paille, etc.) présentes sur la surface supérieure 2, jusqu'aux moyens de collecte 2.

Ces moyens de raclage 8 peuvent être choisis parmi les moyens classiques en soi et connus de l'homme du métier.

Le cas échéant, ces moyens de raclage 8 comportent des dents aptes à racler les conduits 12 qui s'ouvrent vers le haut et dont l'ouverture longitudinale est libre.

### Moyens d'alimentation en liquide de traitement

De manière générale, pour une hygiène efficace et une évacuation optimale des déjections, le système de collecte comporte encore avantageusement des moyens pour une alimentation des conduits 12 avec un liquide de traitement (non représentés).

Ces moyens d'alimentation consistent avantageusement en des moyens permettant un écoulement du liquide de traitement directement dans les conduits 12, par exemple un dispositif du type goutte à goutte.

Ces moyes d'alimentation sont alors avantageusement implantés d'un côté amont des conduits 12 (à proximité de l'une au moins de ses extrémités ouvertes 122), tenant compte du sens de cheminement des déjections.

Le liquide de traitement contient par exemple des bactéries d'intérêt et/ou un agent de désinfection.

### Mise en œuvre

En fonctionnement, le revêtement de sol 1 est susceptible de recevoir différentes matières organiques, notamment des déjections (urine, fèces).

La surface supérieure 11 du revêtement de sol 1 peut être recouverte de paille.

Le revêtement de sol 1 permet alors un écoulement des déjections au travers des ouvertures supérieurs 121, jusqu'aux conduits 12, évitant ainsi l'accumulation de ces liquides sur la surface supérieure 11 qui reste ainsi relativement sèche.

Les matières solides, notamment les fèces et la paille, tendent à demeurer sur la surface supérieure 11, de sorte à éviter ou au moins limiter leurs mélanges avec les matières liquides pour limiter la production d'ammoniac au sein de l'enceinte d'élevage. Cette séparation évite également que des matières solides viennent s'accrocher avec les moyens de convoyage 3 pour conserver une action optimale sur la mise en circulation des déjections au sein des conduits 12.

Lors d'un nettoyage de ce revêtement de sol 1, le liquide de nettoyage va également s'écouler dans ces conduits 12, évitant que la surface supérieure 11 reste mouillée de manière excessive.

Ce phénomène permet par conséquent aux animaux de cheminer sur une surface relativement saine, avec un risque de chute réduit et sans humidification de leurs pieds.

L'ensemble des déjections s'écoulant dans les conduits 12 sont efficacement évacué vers les moyens de collecte 2 (notamment la fosse ou le canal de reprise) par la mise en œuvre des moyens de convoyage 3.

Pour cela, les organes d'entrainement allongés 31 sont mises en mouvement (en sens unique) de sorte à générer le cheminement des déjections vers les moyens de collecte 2.

Ces organes d'entrainement allongés 31 circulent sur la longueur des conduits 12, et en l'espèce sur la longueur des profilés longitudinaux 6.

Du fait de ce cheminement en translation, les surfaces de convoyage 3121 (formées par exemple par les plots monoblocs 312 ou par les reliefs transversaux 315) poussent / tirent les déjections présentes dans le conduit 12 associé de l'amont vers l'aval, en particulier par le biais de leurs faces frontales 3121 situées en aval.

Les organes d'entrainement allongés 31 ont l'intérêt de cheminer dans les conduits 12 avec des forces de frottement réduits, tout en assurant une évacuation efficace des déjections.

Les moyens de convoyage 3 permettent ainsi une circulation et une évacuation active des déjections contenues dans les conduits 12, pour éviter leur stagnation et pour limiter le développement d'ammoniac et de microorganismes dans l'enceinte d'élevage.

Pour un nettoyage optimal de ces conduits 12, un liquide de traitement peut être déversé par l'intermédiaire des moyens d'alimentation précités.

### Procédé de fabrication

La présente invention concerne encore un procédé pour la fabrication d'un organe d'entraînement allongé 31 selon l'invention.

Ce procédé comprend :
a) une opération de fourniture :
   - d'au moins une pièce réalisée dans au moins un matériau élastomère tel que décrit précédemment, et
   - des moyens de renfort longitudinal 313,
b) une opération d'assemblage et de formage, pour former une bande multicouches dont l'une au moins des deux surfaces opposées 3111, 3112 est munie de nervures monoblocs,
c) une opération de découpe de ladite bande multicouches, selon des traits de coupe orientés perpendiculairement à l'axe longitudinal dites nervures monoblocs (c'est-à-dire encore perpendiculairement à leurs arêtes / sommets), pour obtenir lesdits organes d'entraînement allongés 31 munis des surfaces de convoyage 3121 (par exemple de plots monoblocs 312).

L'assemblage des pièces superposées (opération b), pour former un ensemble du type monobloc, est effectué par une technique choisie par exemple parmi :
- la vulcanisation d'un ensemble de pièces en matériau élastomère,
- le collage,
- le soudage.

### Avantages

De manière générale, les moyens de convoyage 3 décrits ci-dessus peuvent être adaptés à façon au sein de l'un quelconque des revêtements de sol 1 constitutifs du système de collecte selon l'invention.

Encore de manière générale, le revêtement de sol 1 selon l'invention permet ainsi une évacuation rapide et en continu des déjections par rapport à la surface supérieure 11 et par rapport à l'enceinte d'élevage, ce qui permet un maintien efficace de cette dernière à l'état sec (ou au moins sans excès d'humidité), limitant ainsi les problèmes d'hygiène rencontrés avec les revêtements de sol habituels.

Le revêtement de sol 1 selon l'invention permet également une certaine séparation des liquides qui s'écoulent dans les conduits 12, par rapport aux fèces et à la paille qui restent principalement sur la surface supérieure 2, de sorte à éviter leur mélange et à limiter la production d'ammoniac au sein de l'enceinte d'élevage.

## Revendications

1. Système pour la collecte des déjections s'écoulant sur le sol d'une enceinte pour l'élevage d'animaux, par exemple de bovins, lequel système de collecte comprend :
(i) un revêtement de sol (1) comportant :
- une surface supérieure (11) adaptée à l'appui des animaux,
- des conduits (12) qui sont ménagés dans ledit revêtement de sol (1) et qui s'ouvrent au niveau de ladite surface supérieure (11), pour permettre l'écoulement desdits déjections,
(ii) des moyens de collecte (2), pour la collecte des déjections circulant au sein desdits conduits (12), et
(iii) des moyens de convoyage (3), pour convoyer les déjections au sein desdits conduits (12) en direction desdits moyens de collecte (2),
lesquels moyens de convoyage (3) comprennent :
- au moins un organe d'entraînement allongé (31) qui est rapporté le long de l'un au moins desdits conduits (12), et
- des moyens (32) pour la manœuvre en translation dudit au moins un organe d'entraînement allongé (31) au sein dudit au moins un conduit associé (12), de sorte que ledit au moins un organe d'entraînement allongé (31) génère ladite circulation de liquide au sein dudit au moins un conduit (12) associé,
**caractérisé en ce que** ledit au moins un organe d'entraînement allongé (31) est réalisé dans au moins un matériau élastomère,
**en ce que** ledit au moins un organe d'entraînement allongé (31) comporte deux surfaces opposées (3111, 3112),
et **en ce que** ledit au moins organe d'entraînement allongé (31) comporte des moyens de renfort longitudinal (313) qui sont adaptés pour limiter les possibilités d'allongement longitudinal dudit organe d'entraînement allongé (31).

2. Système selon la revendication 1, **caractérisé en ce que** lesdits moyens de convoyage (3) comprennent :
- ledit au moins un organe d'entraînement allongé (31) qui est rapporté le long de l'un au moins desdits conduits (12), lequel au moins un organe d'entrainement allongé (31) comporte, réparties sur la longueur de l'une au moins des surfaces opposées (3111, 3112), des surfaces de convoyage (3121) aptes à convoyer les déjections présentes au sein dudit au moins un conduit (12) associé, et
- lesdits moyens (32) pour la manœuvre en translation dudit au moins un organe d'entraînement allongé (31) au sein dudit au moins un conduit associé (12), de sorte que lesdites surfaces de convoyage (3121) génèrent ladite circulation de liquide au sein dudit au moins un conduit (12) associé.

3. Système selon la revendication 2, **caractérisé en ce que** ledit au moins un organe d'entraînement allongé (31) comporte lesdites deux surfaces opposées (3111, 3112) dont l'une au moins est munie de plots monoblocs (312) qui sont répartis sur sa longueur pour former lesdites surfaces de convoyage (3121).

4. Système selon l'une quelconque des revendications 2 ou 3, **caractérisé en ce que** :
- seule l'une des surfaces opposées (3111) dudit au moins un organe d'entraînement allongé (31) est munie des surfaces de convoyage (3121) ; ou
- les deux surfaces opposées (3111, 3112) dudit au moins un organe d'entraînement allongé (31) sont chacune munies des surfaces de convoyage (3121).

5. Système selon les revendications 3 et 4, en combinaison, **caractérisé en ce que** les plots monoblocs (312) des deux surfaces opposées (3111, 3112) dudit au moins un organe d'entraînement allongé (31) sont agencés symétriquement, ou de manière décalée, de part et d'autre de la fibre neutre (313).

6. Système selon l'une quelconque des revendications 3 à 5, **caractérisé en ce que** les plots monoblocs (312) comportent chacun deux faces frontales (3121), aptes à former les surfaces de convoyage.

7. Système selon l'une quelconque des revendications 1 à 6, **caractérisé en ce que** les deux surfaces opposées (3111, 3112) dudit au moins un organe d'entraînement allongé (31) sont lisses, ou approximativement lisses avec lesdits reliefs transversaux (315) formant lesdites surfaces de convoyage (3121).

8. Système selon l'une quelconque des revendications 1 à 7, **caractérisé en ce que** les moyens de renfort longitudinal (313) dudit au moins un organe d'entraînement allongé (31) comprennent une âme de renfort intégrée dans l'épaisseur dudit au moins un organe d'entraînement allongé (31), avantageusement au niveau de la fibre neutre (311').

9. Système selon la revendication 8, **caractérisé en ce que** l'âme de renfort (313) consiste en une trame textile s'étendant parallèlement, ou au moins approximativement parallèlement, aux surfaces opposées (3111, 3112) dudit au moins un organe d'entraînement allongé (31), avantageusement entre les surfaces de côté (3113) dudit au moins un organe d'entraînement allongé (31).

10. Système selon l'une quelconque des revendications 1 à 9, **caractérisé en ce que** les conduits (12) ménagés dans ledit revêtement de sol (1) sont chacun délimités par deux surfaces latérales (125) définissant leur largeur, par une surface inférieure (126) et éventuellement par une surface supérieure (127) définissant sa hauteur,
et **en ce que** ledit au moins un organe d'entraînement allongé (31) est agencé dans lesdits conduits (12) de sorte que ses deux surfaces opposées (3111, 3112) soient agencés en regard :
- desdites surfaces latérales (125), le cas échéant de sorte que les plots monoblocs (312) soient saillants horizontalement, ou
- de ladite surface inférieure (126) et le cas échéant de ladite surface supérieure (127), le cas échéant de sorte que les plots monoblocs (312) soient saillant verticalement.

11. Système selon l'une quelconque des revendications 1 à 10, **caractérisé en ce que** les conduits (12) ménagés dans ledit revêtement de sol (1) sont chacun délimités par deux surfaces verticales (125) définissant sa largeur, par une surface inférieure (126) et éventuellement par une surface supérieure (127) définissant sa hauteur,
**en ce que** la largeur dudit au moins un organe d'entraînement allongé (31) est comprise entre 0,4 et 0,6 fois la largueur desdits conduits (12),
et **en ce que** la hauteur dudit au moins un organe d'entraînement allongé (31) est comprise entre 0,2 et 0,3 fois la hauteur desdits conduits (12).

12. Système selon l'une quelconque des revendications 1 à 11, **caractérisé en ce que** le revêtement de sol (1) comprend :
- une chape réalisée en bitume ou en béton, dans laquelle sont ménagés lesdits conduits, ou
- un ensemble de longerons qui sont solidarisés avec une surface support, cela de manière juxtaposée et tout en préservant un espacement définissant lesdits conduits, ou
- un tapis (5) dans lequel sont ménagés lesdits conduits (12), comportant une face (51, 52) adaptée à l'appui des animaux et une face (51, 52) adaptée à reposer sur une surface support (S).

13. Enceinte d'élevage équipée d'un système de collecte (1, 2, 3) selon l'une quelconque des revendications 1 à 12.

14. Enceinte d'élevage selon la revendication 13, **caractérisée en ce qu'**elle comporte un couloir de circulation (C) comportant un axe longitudinal (C') et recouvert par un revêtement de sol (1), et **en ce que** les conduits (12) dudit revêtement de sol (1) sont agencés parallèlement, ou au moins approximativement parallèlement, par rapport audit axe longitudinal (C').

15. Organe d'entraînement allongé pour un système de collecte selon l'une quelconque des revendications 1 à 12, **caractérisé en ce que** ledit au moins un organe d'entraînement allongé (31) est réalisé dans au moins un matériau élastomère,
**en ce que** ledit au moins un organe d'entraînement allongé (31) comporte deux surfaces opposées (3111, 3112) dont l'une au moins est munie de surfaces de convoyage (3121) qui sont répartis sur sa longueur, par exemple des plots monoblocs (312),
et **en ce que** ledit au moins organe d'entraînement allongé (31) comporte des moyens de renfort longitudinal (313) qui sont adaptés pour limiter ses possibilités d'allongement longitudinal.

## Patentansprüche

1. System für das Sammeln von auf dem Boden einer Anlage für die Aufzucht von Tieren, zum Beispiel von Rindern, abfließenden Ausscheidungen, wobei das Sammelsystem
(i) einen Bodenbelag (1) mit
- einer an die Belastung durch die Tiere angepaßten oberen Oberfläche (11),
- Leitungen (12), die im Bodenbelag (1) eingerichtet sind und die an der oberen Oberfläche (11) offen sind, um ein Abfließen der Ausscheidungen zu ermöglichen,
(ii) Sammelmittel (2) zum Sammeln der in den Leitungen (12) fließenden Ausscheidungen und
(iii) Transportmittel (3) zum Transportieren der Ausscheidungen in den Leitungen (12) zu den Sammelmitteln (12) hin
aufweist,
wobei die Transportmittel (3)
- wenigstens ein längliches Antriebsorgan (31), das entlang wenigstens einer der Leitungen (12) angebracht ist, und
- Mittel (32) zum translatorischen Bewegen des wenigstens einen länglichen Antriebsorgans (31) an der wenigstens einen zugehörigen Leitung (12) derart, daß das wenigstens eine längliche Antriebsorgan (31) das Fließen von Flüssigkeit in der wenigstens einen zugehörigen Leitung (12) erzeugt,
aufweisen,
**dadurch gekennzeichnet, daß** das wenigstens eine längliche Antriebsorgan (31) aus wenigstens einem Elastomermaterial gefertigt ist,
daß das wenigstens eine längliche Antriebsorgan (31) zwei entgegengesetzte Oberflächen (3111, 3112) aufweist,
und daß das wenigstens eine längliche Antriebsorgan (31) längs gerichtete Verstärkungsmittel (313) aufweist, die dazu ausgelegt sind, die Möglichkeiten einer länglichen Streckung des länglichen Antriebsorgans (31) zu begrenzen.

2. System gemäß Anspruch 1, **dadurch gekennzeichnet, daß** die Transportmittel (3)
- das wenigstens eine längliche Antriebsorgan (31), das entlang wenigstens einer der Leitungen (12) angebracht ist, wobei das wenigstens eine längliche Antriebsorgan (31), über die Länge wenigstens einer der entgegengesetzten Oberflächen (3111, 3112) verteilt, Transportflächen (3121) aufweist, die geeignet sind, die in der wenigstens einen zugehörigen Leitung (12) vorhandenen Ausscheidungen zu transportieren, und
- die Mittel (32) zum translatorischen Bewegen des wenigstens einen länglichen Antriebsorgans (31) an der wenigstens einen zugehörigen Leitung (12) derart, daß die Transportflächen (3121) das Fließen von Flüssigkeit in der wenigstens einen zugehörigen Leitung (12) erzeugen,
aufweisen.

3. System gemäß Anspruch 2, **dadurch gekennzeichnet, daß** das wenigstens eine längliche Antriebsorgan (31) die beiden entgegengesetzten Oberflächen (3111, 3112) aufweist, von denen wenigstens eine mit einstückigen Stollen (312) versehen ist, die über ihre Länge verteilt sind, um die Transportflächen (3121) zu bilden.

4. System gemäß einem der Ansprüche 2 oder 3, **dadurch gekennzeichnet, daß**
- nur eine der entgegengesetzten Oberflächen (3111) des wenigstens einen länglichen Antriebsorgans (31) mit den Transportflächen (3121) versehen ist oder
- jede der beiden entgegengesetzten Oberflächen (3111, 3112) des wenigstens einen länglichen Antriebsorgans (31) mit den Transportflächen (3121) versehen ist.

5. System gemäß den miteinander kombinierten Ansprüchen 3 und 4, **dadurch gekennzeichnet, daß** die einstückigen Stollen (312) der beiden entgegengesetzten Oberflächen (3111, 3112) des wenigstens einen länglichen Antriebsorgans (31) beiderseits der neutralen Faser (313) symmetrisch oder versetzt angeordnet sind.

6. System gemäß einem der Ansprüche 3 bis 5, **dadurch gekennzeichnet, daß** die einstückigen Stollen (312) jeweils zwei Vorderseiten (3121) aufweisen, die geeignet sind, die Transportflächen zu bilden.

7. System gemäß einem der Ansprüche 1 bis 6, **dadurch gekennzeichnet, daß** die beiden entgegengesetzten Oberflächen (3111, 3112) des wenigstens einen länglichen Antriebsorgans (31) glatt oder näherungsweise glatt mit den die Transportflächen (3121) bildenden Querreliefs (315) sind.

8. System gemäß einem der Ansprüche 1 bis 7, **dadurch gekennzeichnet, daß** die längs gerichteten Verstärkungsmittel (313) des wenigstens einen länglichen Antriebsorgans (31) eine in der Dicke des wenigstens einen länglichen Antriebsorgans (31), vorzugsweise im Bereich der neutralen Faser (311'), integrierte Verstärkungsseele aufweist.

9. System gemäß Anspruch 8, **dadurch gekennzeichnet, daß** die Verstärkungsseele (313) aus einem sich parallel oder wenigstens näherungsweise parallel zu den entgegengesetzten Oberflächen (3111, 3112) des wenigstens einen länglichen Antriebsorgans (31), vorzugsweise zwischen den Seitenflächen (3113) des wenigstens einen länglichen Antriebsorgans (31), erstreckenden Textilfaden besteht.

10. System gemäß einem der Ansprüche 1 bis 9, **dadurch gekennzeichnet, daß** die im Bodenbelag (1) eingerichteten Leitungen (12) jeweils durch zwei seitliche Oberflächen (125), die deren Breite definieren, durch eine untere Oberfläche (126) und eventuell durch eine obere Oberfläche (127), die deren Höhe definiert, begrenzt sind,
und daß das wenigstens eine längliche Antriebsorgan (31) in den Leitungen (12) so angeordnet ist, daß seine beiden entgegengesetzten Oberflächen (3111, 3112) gegenüber
- den Seitenflächen (125), gegebenenfalls so, daß die einstückigen Stollen (312) horizontal hervorstehen, oder
- der unteren Oberfläche (126) und gegebenenfalls gegenüber der oberen Oberfläche (127), gegebenenfalls so, daß die einstückigen Stollen (312) vertikal hervorstehen,
angeordnet sind.

11. System gemäß einem der Ansprüche 1 bis 10, **dadurch gekennzeichnet, daß** die in dem Bodenbelag (1) eingerichteten Leitungen (12) jeweils durch zwei vertikale, deren Breite definierende Oberflächen (125), durch eine untere Oberfläche (126) und gegebenenfalls durch eine deren Höhe definierende Oberfläche (127) begrenzt sind,
daß die Breite des wenigstens einen länglichen Antriebsorgans (31) zwischen dem 0,4-fachen und dem 0,6-fachen der Breite der Leitungen (12) beträgt,
und daß die Höhe des wenigstens einen länglichen Antriebsorgans (31) zwischen dem 0,2-fachen und dem 0,3-fachen der Höhe der Leitungen (12) beträgt.

12. System gemäß einem der Ansprüche 1 bis 11, **dadurch gekennzeichnet, daß** der Bodenbelag (1)
- einen aus Bitumen oder Beton gefertigten Estrich, in dem die Leitungen eingerichtet sind, oder
- eine Gesamtheit von Längsträgern, die mit einer Trägeroberfläche verbunden sind, und zwar nebeneinander liegend und dabei einen die Leitungen definierenden Abstand aufweisend, oder
- einen Teppich (5), in dem die Leitungen (12) eingerichtet sind, der eine an den Druck der Tiere angepaßte Seite (51, 52) und eine an das Aufliegen auf einer Trägeroberfläche (S) angepaßte Seite (51, 52) aufweist,
aufweist.

13. Aufzuchtanlage, die mit einem Sammelsystem (1, 2, 3) gemäß einem der Ansprüche 1 bis 12 ausgestattet ist.

14. Aufzuchtanlage gemäß Anspruch 13, **dadurch gekennzeichnet, daß** sie einen eine Längsachse (C') aufweisenden und mit einem Bodenbelag (1) bedeckten Bewegungskorridor (C) aufweist und daß die Leitungen (12) des Bodenbelags (1) parallel oder wenigstens näherungsweise parallel zur Längsachse (C') angeordnet sind.

15. Längliches Antriebsorgan für ein Sammelsystem gemäß einem der Ansprüche 1 bis 12, **dadurch gekennzeichnet, daß** das wenigstens eine längliche Antriebsorgan (31) aus wenigstens einem Elastomermaterial gefertigt ist,
daß das wenigstens eine längliche Antriebsorgan (31) zwei entgegengesetzte Oberflächen (3111, 3112) aufweist, von denen wenigstens eine mit Transportflächen (3121) versehen ist, die über ihre Länge verteilt sind, zum Beispiel einstückige Stollen (312),
und daß das wenigstens eine längliche Antriebsorgan (31) längliche Verstärkungsmittel (313) aufweist, die dazu ausgelegt sind, seine Möglichkeiten einer länglichen Streckung zu begrenzen.

## Claims

1. A system for collecting the excreta flowing on the ground of an enclosure for livestock, for example cattle, said collecting system comprising:
(i) a flooring (1) including:
- an upper surface (11) suitable for the animals to support thereon,
- ducts (12) that are formed in said flooring (1) and that open at said upper surface (11), for the flowing of said excreta,
(ii) collection means (12), for collecting the excreta circulating within said ducts (12), and
(iii) conveyor means (3), for conveying the excreta within said ducts (12), towards said collection means (2),
said conveyor means (3) comprising:
- at least one elongated driving members (31) that is added along one at least of said ducts (12), and
- means (32) for operating said at least one elongated driving member (31) in translation within said at least one associated duct (12), so that said at least one elongated driving member (31) generates said circulation of liquid within said at least one associated duct (12),
**characterized in that** said at least one elongated driving member (31) is made of at least one elastomeric material,
**in that** said at least one elongated driving member (31) includes two opposite surfaces (3111, 3112),
and **in that** said at least one elongated driving member (31) includes longitudinal reinforcing means (313) that are adapted to limit the possibilities of longitudinal elongation of said elongated driving member (31).

2. The system according to claim 1, **characterized in that** said conveyor means (3) comprise:
- said at least one elongated driving member (31) that is added along one at least of said ducts (12), said at least one elongated driving member (31) including, distributed over the length of one at least of the opposite surfaces (3111, 3112), conveying surfaces (3121) adapted to convey the excreta present within said at least one associated duct (12), and
- said means (32) for operating said at least one elongated driving member (31) in translation within said at least one associated duct (12), so that said conveying surfaces (3121) generate said circulation of liquid within said at least one associated duct (12).

3. The system according to claim 2, **characterized in that** said at least one elongated driving member (31) includes said two opposite surfaces (3111, 3112), at least one of which is provided with single-piece pads (312) that are distributed over the length thereof to form said conveying surfaces (3121).

4. The system according to any one of claims 2 or 3, **characterized in that**:
- only one of said opposite surfaces (3111) of said at least one elongated driving member (31) is provided with conveying surfaces (3121); or
- the two opposite surfaces (3111, 3112) of said at least one elongated driving member (31) are each provided with conveying surfaces (3121).

5. The system according to claims 3 and 4, in combination, **characterized in that** the single-piece pads (312) of the two opposite surfaces (3111, 3112) of said at least one elongated driving member (31) are arranged symmetrically, or in an offset manner, on either side of the neutral fibre (313).

6. The system according to any one of claims 3 to 5, **characterized in that** the single-piece pads (312) each include two front faces (3121), adapted to form the conveying surfaces.

7. The system according to any one of claims 1 to 6, **characterized in that** the two opposite surfaces (3111, 3112) of said at least one elongated driving member (31) are smooth, or approximately smooth, with said transverse reliefs (315) forming said conveying surfaces (3121).

8. The system according to any one of claims 1 to 7, **characterized in that** the longitudinal reinforcing means (313) of said at least one elongated driving member (31) comprise a reinforcing core integrated into the thickness of said at least one elongated driving member (31), advantageously at the neutral fibre (311').

9. The system according to claim 8, **characterized in that** the reinforcing core (313) consists of a textile weft extending parallel, or at least approximately parallel, to the opposite surfaces (3111, 3112) of said at least one elongated driving member (31), advantageously between the side surfaces (3113) of said at least one elongated driving member (31).

10. The system according to any one of claims 1 to 9, **characterized in that** the ducts (12) formed in said flooring (1) are each delimited by two lateral surfaces (125) defining the width thereof, by a lower surface (126) and, possibly, by an upper surface (127) defining the height thereof,
and **in that** said at least one elongated driving member (31) is arranged in said ducts (12) so that its two opposite surfaces (3111, 3112) are arranged opposite:
- said lateral surfaces (125), as the case may be so that the single-piece pads (312) protrude horizontally, or
- said lower surface (126) and, as the case may be, said upper surface (127), as the case may be so that the single-piece pads (312) protrude vertically.

11. The system according to any one of claims 1 to 10, **characterized in that** the ducts (12) formed in said flooring (1) are each delimited by two vertical surfaces (125) defining the width thereof, by a lower surface (126) and, possibly, by an upper surface (127) defining the height thereof,
**in that** the width of said at least one elongated driving member (31) is comprised between 0.4 and 0.6 times the width of said ducts (12),
and **in that** the height of said at least one elongated driving member (31) is comprised between 0.2 and 0.3 times the height of said ducts (12).

12. The system according to any one of claims 1 to 11, **characterized in that** the flooring (1) comprises :
- a slab made of bitumen or concrete, in which are formed said ducts, or
- a set of stringers that are fastened to a support surface, juxtaposed to each other while preserving a space defining said ducts, or
- a carpet (5) in which are formed said ducts (12), including a face (51, 52) suitable for the animals to rest thereon, and a face (51, 52) suitable for bearing on a support surface (S).

13. A livestock enclosure equipped with a collection system (1, 2, 3) according to any one of claims 1 to 12.

14. The livestock enclosure according to claim 13, **characterized in that** it includes a circulation corridor (C) having a longitudinal axis (C') and covered with a flooring (1), and **in that** the ducts (12) of said flooring (1) are arranged parallel, or at least approximately parallel, with respect to said longitudinal axis (C').

15. An elongated driving member for a collection system according to any one of claims 1 to 12, **characterized in that** said at least one elongated driving member (31) is made of at least one elastomeric material,
**in that** said at least one elongated driving member (31) includes two opposite surfaces (3111, 3112), at least one of which is provided with conveying surfaces (3121) that are distributed over the length thereof, for example single-piece pads (312),
and **in that** said at least one elongated driving member (31) includes longitudinal reinforcing means (313) that are adapted to limit the possibilities of longitudinal elongation thereof.
